# EUROPEAN PATENT APPLICATION

(11) **EP 2 477 310 A1**
(43) Date of publication of application: **18.07.2012**
(21) Application number: 11150960.0
(22) Date of filing: 14.01.2011
(51) Int. Cl.: H02K 1/20, H02K 1/16, H02K 1/32, H02K 9/06

(54) **Electrical machine with improved cooling**

(71) Applicant: SIEMENS AKTIENGESELLSCHAFT, 80333 München (DE)
(72) Inventor: Kaushal, Vishal, 122015, Gurgaon (IN); Pandey, Devi Prasad, 122002, Gurgaon (IN); Rawat, Saurabh, 110075, New Delhi (IN); Singh, Harpreet, 122001, Gurgaon (IN); Vijay, Bhavesh, 122001, Gurgaon (IN)

(57) **Abstract**

An electrical machine (1) comprises a rotor (2) capable of rotation about a longitudinal axis (3) and a stator having a core (4) disposed coaxially around the rotor (2). The core (4) comprises a radially outward base portion (21) from which a plurality of teeth (22) extend radially inwardly toward the rotor (2), each tooth (22) having an end face (23) that is separated from the rotor by gap (8) that defines a passageway for flow a first portion of a cooling medium (6a) between the rotor (2) and the core (4) of the stator. In accordance with the present invention, each said end face (23) comprises a curved first surface (23) in contact with said cooling medium (6a) flowing axially through said gap (8).

## Description

The present invention relates to an electrical machine having a stator and a rotor, and in particular, to an improvement in cooling of such an electrical machine.

An electrical machine, such as an electrical generator or a motor includes a rotor. The rotor is surrounded by a stator which comprises a stator core and stator windings. The stator core is disposed coaxially around the rotor and comprises slots though which the stator windings are wound. The teeth and the rotor are separated by an air gap. In case of an electrical generator, the rotor is coupled to a prime mover, such as a gas turbine, by a shaft. In operation, torque from the prime mover is transmitted to the rotor via the shaft, causing it to rotate. This causes a rotating magnetic field through the stator windings which results in an electrical voltage/current across the stator windings.

An important issue in the design of electrical machines, particularly turbo-generators as described above, is the effective removal of heat generated in the stator windings during operation. The efficiency with which the transfer of heat from the stator to the cooling medium is achieved directly affects the overall output that can be derived from the machine. For the purpose of cooling, a cooling medium, such as air or hydrogen, among others, circulated in the gap between the stator core and the rotor, for example by means of a blower and is made to flow over the stator windings and stator core. Some of the heat from the windings is passed to the core through conduction and is then removed by the cooling medium which flows through the vents provided in the core.

The object of the present invention is to provide an inventive design for an electrical machine that results in improved cooling with respect to the above-mentioned state of the art.

The above object is achieved by the electrical machine according to claim 1 and the method according to claim 7.

The amount of convective heat transfer from the core to the cooling medium depends on the surface area of the core with which the cooling medium comes in contact. The underlying idea of the present invention is to modify the shape of the stator such that the area available for heat transfer is increased. In accordance with the present invention, the end faces of the teeth of the stator core, which face the rotor, comprise a curved first surface in contact with the portion of the cooling medium flowing axially through the gap between stator core and the rotor. This design increases the heat transfer surface area of the teeth and thus results in improved cooling of the stator.

In a further embodiment, one or more radially outwardly extending slots are provided in the base portion of the core, wherein each slot defines a second surface in contact with said axially flowing cooling medium. This embodiment provides further cooling of the stator core by convective heat transfer between the additional surfaces defined by these slots and the axially flowing cooling medium.

In one embodiment, the core is made up of a plurality of laminated sheets stacked axially adjacent to each other, further wherein radial passageways for the cooling medium are defined between adjacent pairs of laminated sheets.

In a further embodiment, the electrical machine further comprises means for introducing a portion of the coolant medium into said gap through one or more of said radial passageways defined between said laminated sheets. The cooling medium flowing through the air gap gets heated up due to heat transfer from the stator and this embodiment results in a cooling of this heated up medium, to further improve overall cooling efficiency.

In one embodiment, each laminated sheet comprises a plurality of segments of punching sheets. The proposed design thus requires a modification in the die for making the punching and hence does not lead to an increase in the manufacturing steps.

The present invention is further described hereinafter with reference to illustrated embodiments shown in the accompanying drawings, in which:
- FIG 1: is a longitudinal sectional view of a portion of an electrical machine, which is a turbo-generator in accordance with one embodiment of the present invention, and
- FIG 2: is a schematic cross-sectional view of an electrical machine showing the arrangement of the rotor and the stator core.

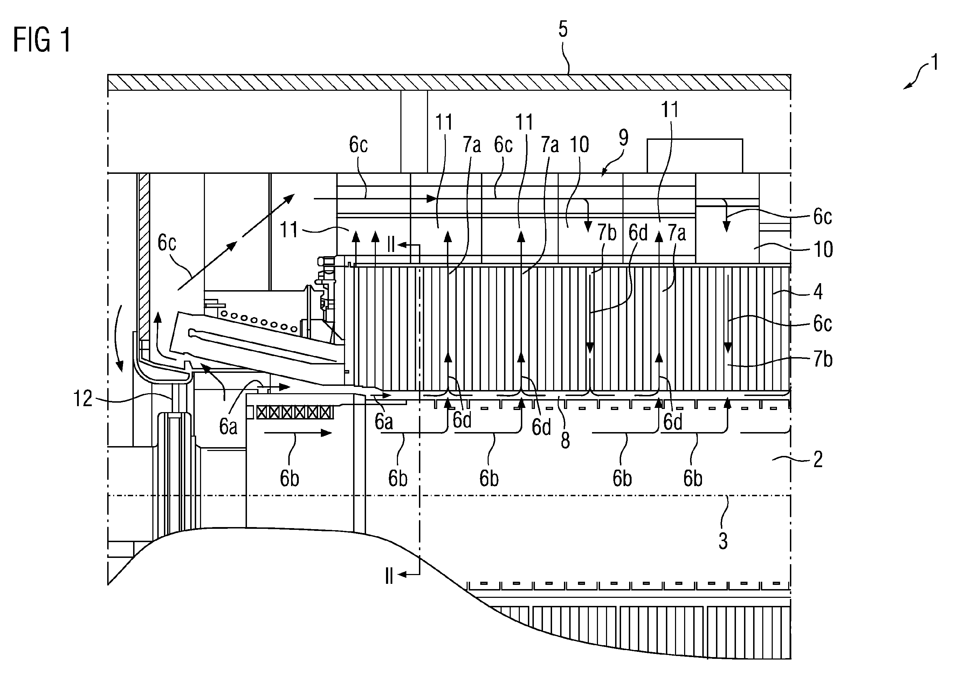

Embodiments of the present invention provide an improved design for cooling of an electrical machine. By way of example, such an electrical machine may include an electrical motor or a generator. Referring now to FIG 1, there is illustrated an electrical machine 1, exemplified as a turbo-generator, which includes a rotor 2 capable of rotating about a machine axis 3. Although not shown in FIG 1, it may be understood that the rotor 2 may be coupled to a gas turbine engine by means of a shaft, which transmits mechanical energy (as rotational torque) from the gas turbine to the rotor 2. The electrical machine 1 further includes a stator including a stator core 4 that coaxially surrounds the rotor 2. The stator core 4 and the rotor are supported in a housing 5. For example, the stator core may be supported by frame rings within the hosing 5, while the rotor 2 is supported between bearings mounted at the ends of the housing 5. The rotor 2 and the stator core 4 are separated by an annular gap 8, referred to as air gap.

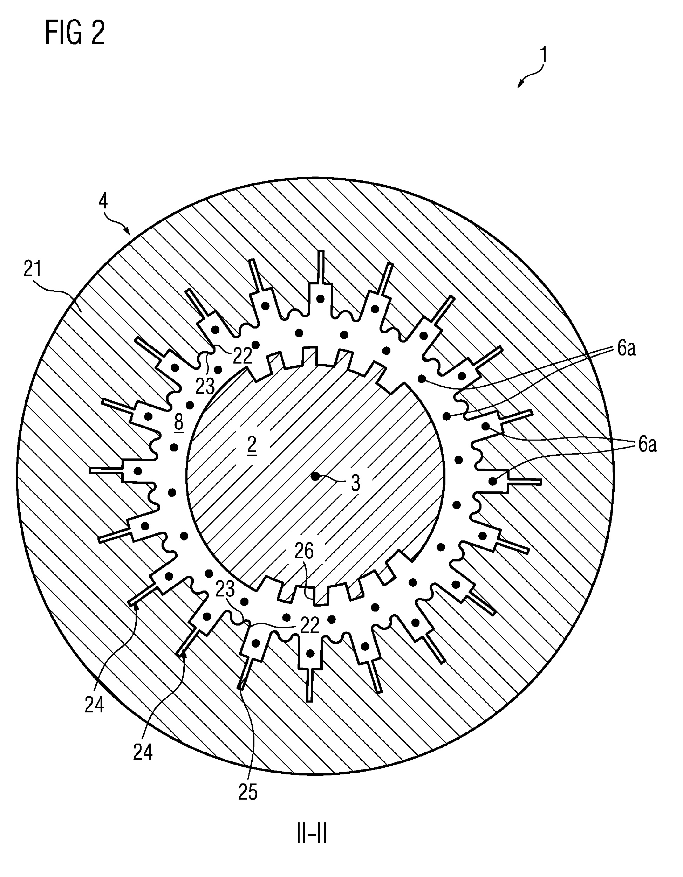

FIG 2 is a cross-sectional view along a section II-II, illustrating the rotor 2 and the stator core 4. As shown, the stator core 4 has a radially outward base portion 21, from which a plurality of teeth 22 extend radially inward toward the rotor. The rotor 2 is disposed in a central cylindrical hole of the stator core 4. As shown, the rotor 2 includes longitudinal slots 26 provided at a portion of the periphery which are used to accommodate the field windings, while the stator windings are mounted on the teeth 22 of the stator core 4. The stator core 4 is made up of several laminated sheets stacked axially next to each other. Each lamination, in turn, may be made up of several segments of stator core punching sheets.

During operation, the rotor and stator are heated up and hence necessitate an arrangement to transfer heat from these components to a cooling medium such as air or hydrogen. Referring now jointly to FIG 1 and FIG 2, in the illustrated embodiment, the machine 1 is air-cooled, wherein the cooling medium, i.e., air, is divided into three portions 6a, 6b and 6c. The major portion 6a is made to flows axially into the gap 8 between the rotor 2 and the stator core 4 by means of a blower or a fan 12. A second portion 6b of the cooling medium is made to flow into the rotor 2. The flow path of the portion 6b is divided into a plurality of small longitudinal paths through the rotor 2, wherein the pressure of the blower 12 is used to cause the flow of the cooling medium 6a through these short longitudinal paths. The third portion 6c is directed radially outward and is used for direct cooling of the stator core 4.

Referring now to FIG 2, in accordance with the present invention, the end face 23 of each tooth 22 of the stator core 4 includes a curved surface. This increases the surface area of the end face 23 to enhance the convective heat transfer from the stator core 4 to the cooling medium 6a flowing axially through the gap 8. The direction of flow of the cooling medium 6a is substantially parallel to the axis 3 and is hence represented as dots in FIG 2. Further advantageously, in the illustrated embodiment, one or more radially inwardly extending slots 24 are provided on the base portion 21 of the stator core 4. The slots 24 define an additional heat transfer surface 25 in contact with the axially flowing cooling medium 6a. This provides a further improvement in the convective heat transfer from the stator core, thereby enhancing the cooling and hence the power output of the turbo-generator. From the point of view of manufacturing, inventive stator core design is simple and does not involve any additional manufacturing step but merely a modification of a conventional die to manufacture the stator core punches having the above-described shape. Referring back to FIG 1, the first portion 6a of the cooling medium gets heated as it flows longitudinally through the air gap 8 due to heat transfer from the rotor 2 and the stator core 4. As a possible remedy as shown in the illustrated embodiment, radial inlet ducts 10 are provided to direct the portion 6c of the cooling medium radially inward toward the gap 8, via radial passageways 7b between the stator corer laminations. In this way, the portion 6b is mixed with the heated up portion 6a flowing axially through the gap 8. This ensures that the heat transfer capacity of the cooling medium is not reduced as it flows axially through the gap 8. As shown, due to the centrifugal action caused by the rotation of the rotor 2, a portion 6d of the cooling medium flows radially outwardly via radial passageways 7a between the stator core laminations, and finally exits the stator core 4 via radial outlet ducts 11.

While this invention has been described in detail with reference to certain preferred embodiments, it should be appreciated that the present invention is not limited to those precise embodiments. Rather, in view of the present disclosure which describes the current best mode for practicing the invention, many modifications and variations would present themselves, to those of skilled in the art without departing from the scope of this invention. The scope of the invention is, therefore, indicated by the following claims rather than by the foregoing description. All changes, modifications, and variations coming within the meaning and range of equivalency of the claims are to be considered within their scope.

## Claims

1. An electrical machine (1), comprising:
- a rotor (2) capable of rotation about an axis (3),
- a stator having a core (4) disposed coaxially around the rotor (2), the core (4) comprising a radially outward base portion (21) from which a plurality of teeth (22) extend radially inwardly toward the rotor (2), each tooth (22) having an end face (23) that is separated from the rotor by a gap (8) that defines an axial passageway for flow of a cooling medium (6a) between the rotor (2) and the core (4) of the stator,
wherein said end face (23) comprises a curved first surface (23) in contact with said cooling medium (6a) flowing axially through said gap (8).

2. The electrical machine (1) according to claim 1, wherein one or more radially outwardly extending slots (24) are provided in the base portion (21) of the core (4), wherein each slot (24) defines a second surface (25) in contact with said axially flowing cooling medium (6a).

3. The electrical machine (1) according to any of the preceding claims, wherein the core is made up of a plurality of laminated sheets stacked axially adjacent to each other, further wherein radial passageways (7a,b) for the cooling medium are defined between adjacent pairs of laminated sheets.

4. The electrical machine (1) according to claim 3, further comprising means for introducing a portion (6c) of the coolant medium into said gap (8) through one or more of said radial passageways (7b) defined between said laminated sheets.

5. The electrical machine (1) according to claim 3, wherein each laminated sheet comprises a plurality of segments of punching sheets.

6. The electrical machine (1) according to any of the preceding claims, wherein said electrical machine is a turbo-generator.

7. A method for manufacturing an electrical machine (1), comprising:
- disposing a rotor (2) capable of rotation about an axis (3),
- disposing a core (4) of a stator coaxially around the rotor (2), the core (4) comprising a radially outward base portion (21) from which a plurality of teeth (22) extend radially inwardly toward the rotor (2), each tooth (22) having an end face (23) that is separated from the rotor by gap (8) that defines a passageway for flow a portion of cooling medium (6a) between the rotor (2) and the core (4) of the stator, wherein the core (4) is formed such that each said end face (23) comprises a curved first surface adapted to be in contact with the cooling medium (6a) flowing axially through said gap (8) .

8. The method according to claim 7, wherein the core (4) is formed further such that one or more radially outwardly extending slots (24) are provided in the base portion (21) of the core (4), wherein each slot (24) defines a second surface (25) in contact with said axially flowing cooling medium (6a) .

9. The method according to any of claims 7 and 8, wherein the core (4) is formed by stacking a plurality of laminated sheets axially adjacent to each other, further wherein radial passageways (7a,b) for the cooling medium are defined between adjacent pairs of laminated sheets.

10. The method according to claim 9, further comprising providing means for introducing a portion of the coolant medium (6b) into said longitudinal passageway through one or more of said radial passageways (7b) defined between said laminated sheets.

11. The method according to claim 9, wherein each laminated sheet is formed from a plurality of segments of punching sheets.
